# EUROPEAN PATENT APPLICATION

(11) **EP 4 704 392 A1**
(43) Date of publication of application: **04.03.2026**
(21) Application number: 24306427.6
(22) Date of filing: 30.08.2024
(51) Int. Cl.: H04L 43/026, H04L 43/04, H04L 43/12

(54) **SYSTEM AND METHOD FOR OPTIMIZED MANAGEMENT OF DATACENTER NETWORK FLOWS INFORMATION**

(71) Applicant: OVH, 59100 Roubaix (FR)
(72) Inventor: GUILLAUME, Xavier, 59512 Roubaix (FR); BOIN, Clément, 59000 Lille (FR); RAVAIL, Charlelie, 69008 Lyon (FR); LOPEZ, Benjamin, 59510 Hem (FR)
(74) Representative: BCF Global

(57) **Abstract**

The disclosed systems and methods are directed to providing a configuration for the management of network flow information. The disclosed configuration provides a network flow collection device to receive/process network flow information packets provided by network routing devices, a compression module to compress the received network flow information packet stream, an encapsulation/serialization module configured to encapsulate/serialize the compressed packet data stream of network flow information into a consolidated network flow information data queue, a message brokering module to receive the consolidated network flow information data queue, segregate the consolidated information data queues into individual identifiable network flow information data queues and store for access by a client access module.

## Description

### TECHNICAL FIELD

The present disclosure generally relates to network traffic engineering analytics, and in particular, to optimizing the management processing of network flows information for datacenters.

### BACKGROUND

In servicing client demands, datacenters must be configured with the necessary resources to adequately process massive amounts of network traffic data on almost a real-time basis. At the same time, datacenters must also monitor the flow status of network traffic to detect any issues with the security and/or performance of the network or related network elements.

To this end, conventional techniques employ various mechanisms that collect network flow information. Network flow information may include a variety of traffic-related operational data and metrics. The collected network flow information is then analyzed to detect potential malicious threats (*e.g*., distributed denial of service (DDoS) along with assessing overall network traffic performance.

However, these conventional techniques expend a substantial amount of valuable processing resources in evaluating network flows information to assess network performance and detect potential malicious threats. Such expense of processing resources contributes to overall network inefficiencies and latencies that may compromise reaction times to identified threats as well as compromise the expected network traffic performance by clients to adequately service their data traffic processing needs.

Therefore, there is an interest in providing a network flows monitoring configuration that optimally balances the resources expended for processing network flows information related to monitoring malicious threats and network traffic performance versus maintaining an expected level of overall network traffic performance.

### SUMMARY

The embodiments of the present disclosure have been designed based on the developers' appreciation of the drawbacks associated with conventional approaches in processing network flows information related to inefficiencies and latencies resulting therefrom.

According to one aspect of the disclosed embodiments, there is provided a system for managing network flow information that includes a network flow collection device for receiving and processing network flow information packets provided by network routing devices, the network flow collection device comprising one or more ports to receive incoming network flow information packets provided by the network routing devices, a monitoring and consolidation module to monitor each of the one or more ports to detect incoming network flow information packets and aggregate the detected network flow information packets into a packet data stream of network flow information, a compression module to compress the packet data stream of network flow information, and an encapsulation and serialization module to encapsulate and serialize the compressed packet data stream of network flow information into a consolidated network flow information data queue.

The disclosed system further includes a message brokering module communicatively-coupled to the network flow collection device and the client access module of the network flow client library module, the message brokering module and operative to receive and store the consolidated network flow information data queue along with prior consolidated network flow information data queues, segregate each of the consolidated information data queues into individual identifiable network flow information data queues and accessibly store for further client processing.

The disclosed system additionally provides that the message brokering module operates under an rdKafka utility framework and that it communicates with at least two network flow collection devices and the client access module via UDP or TCP transport protocols.

In another aspect of the the disclosed embodiments, there is provided a method for managing network flow information that includes receiving, by a network flow collection device, incoming network flow information packets provided by network routing devices, detecting receipt of incoming network flow information packets; aggregating the detected network flow information packets into a packet data stream of network flow information, compressing the packet data stream of network flow information, encapsulating and serializing the compressed packet data stream of network flow information into a consolidated network flow information data queue, providing a network flow client library module for processing the consolidated network flow information data queue by requesting and receiving the consolidated network flow information data queue and deserializing and decompressing the network flow information data queue into a packet data stream of network flow information.

The disclosed method further includes providing a message brokering module communicatively-coupled to the network flow collection device and the network flow client library module, the message brokering module that receives and stores the consolidated network flow information data queue along with prior consolidated network flow information data queues, and segregates each of the consolidated information data queues into individual identifiable network flow information data queues for further client processing.

The disclosed method additionally provides that the message brokering module operates under an rdKafka utility framework and that it communicates with at least two network flow collection devices and the client access module via UDP or TCP transport protocols.

It will be appreciated that additional and/or alternative features, aspects, and advantages of the present technology will become apparent from the following description, accompanying drawings, and the appended claims.

### BRIEF DESCRIPTION OF THE FIGURES

Further features and advantages of the present disclosure will become apparent from the following detailed description taken in combination with the appended drawings, in which:
FIG. 1 depicts a high-level conceptual diagram of a datacenter network flow information management system, in accordance with the embodiments of the present disclosure;
FIG. 2 depicts a functional processing flow diagram of selected elements of the datacenter network flow information management system, in accordance with the embodiments of the present disclosure;
FIG. 3 depicts a flow diagram of a method for collecting network flow information packets, in accordance with the embodiments of the present disclosure;
FIG. 4 depicts a flow diagram of a method for managing network flow information, in accordance with the embodiments of the present disclosure; and
FIG. 5 depicts an exemplary computing environment, in accordance with various embodiments of the present disclosure.

It is to be understood that throughout the appended drawings and corresponding descriptions, like features are identified by like reference characters and that the drawings are not to scale. It should also be understood that the drawings and ensuing descriptions are intended for illustrative purposes only and that such disclosures are not intended to limit the scope of the claims.

### DETAILED DESCRIPTION

The present disclosure is directed to addressing at least some of the drawbacks associated with conventional approaches in processing network flows information related to inefficiencies and latencies resulting therefrom.

It will be understood, however, that the examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity. In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology.

Moreover, where no examples of modifications have been set forth, it should not be interpreted that no modifications are possible and/or that what is described is the sole manner of implementing that element of the present technology. As such, all statements herein reciting principles, aspects, and implementations of the present technology, as well as specific examples thereof, are intended to encompass both structural and functional equivalents thereof, whether they are currently known or developed in the future.

It will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

Similarly, functions of the various elements shown in the figures, including any functional block labeled as a "processor", may be provided through the use of dedicated hardware as well as hardware capable of executing software in association with appropriate software.

As will be described below, the disclosed embodiments uniquely integrate features of various technologies to provide a configuration for managing network flow information that optimizes the balance between resources expended for processing network flows information related to monitoring malicious threats and network traffic status while maintaining an expected level of overall network traffic performance.

With these fundamentals in place, presented heretofore are non-limiting embodiments that illustrate various aspects and implementations of the present disclosure.

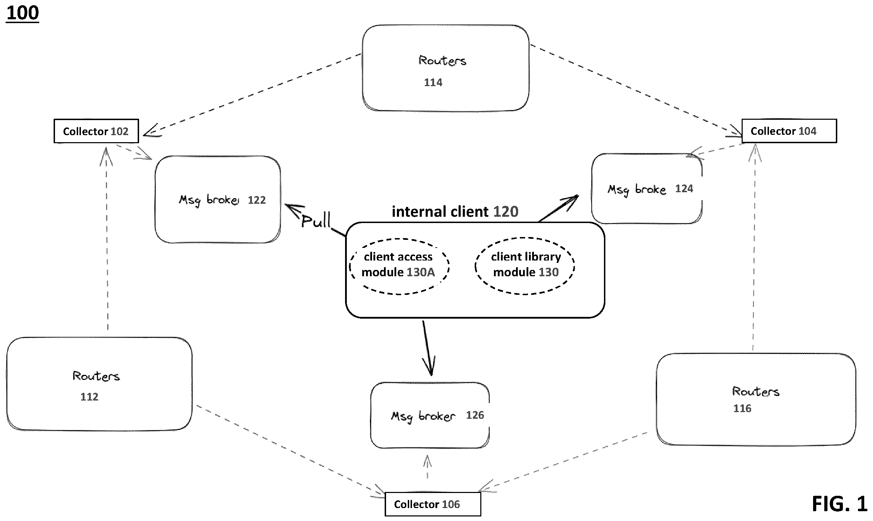

FIG. 1 depicts a high-level conceptual diagram of a datacenter network flow information management system **100,** in accordance with the embodiments of the present disclosure. As shown, datacenter network flow information system **100** comprises network routing devices **112, 114, 116** that are configured to transmit network flows information packets indicative of operations and management attributes of the network data traffic processed thereby. The transmission of network flows information packets may be conveyed in accordance with UDP or TCP transport layer protocols.

The network flows information packets indicative of operational/management attributes of the network data traffic processed by network routing devices **112, 114, 116** may include data traffic and metrics, such as, source/destination IP addresses, source/destination port numbers, IP protocols used, router/switch interface attributes, class of service, number of packets/bytes associated with the network flow, earliest/latest timestamp of packets associated with the network flow, *etc.*

System **100** further comprises network flow collection devices **102, 104, 106** that are communicatively-coupled to the network routing devices **112, 114, 116.** Each of the network routing devices **112, 114, 116** is configured to send the network flows information packets, via UDP/TCP, to at least two network flow collection devices **102, 104, 106** for redundancy. As will be described in further detail below, the network flow collection devices **102, 104, 106** are configured to process and aggregate network flows information packets from different network routing devices into consolidated network flow information data queues that are stored in manner that can be easily accessed by internal datacenter clients **120** interested in analyzing/evaluating the consolidated network flow information data queues.

System **100** further comprises message brokering modules **122, 124, 126** configured to communicate, via a tunnelling modality, with the network flow collection devices **102, 104, 106** and interested internal datacenter clients **120.** The tunnelling communications modality may operate under UDP or TCP, in which the message brokering modules **122, 124, 126** operate to "pull-in" particular consolidated network flow information data queues based on requests from interested internal clients **120.**

The message brokering modules **122, 124, 126** are also configured to store consolidated network flow information data queues as well as segregate the consolidated network flow information data queues into individual identifiable network flow information data queues for specific selection by interested internal clients **120.** The depicted message brokering modules **122, 124, 126** operate under a rdKafka utility framework. In addition to having solid performance characteristics and availability guarantees, the Kafka technology offers retention policies that allows "backtracking" and consume messages starting from a previous point in time to some extent (depending on the retention policies). However, the use of a Kafka-based message brokering module is not intended to be limiting, as other message brokering frameworks are also contemplated.

As noted above, interested datacenter internal clients **120** may request access to, and receive, consolidated network flow information data queues for analyzing/evaluating the consolidated network flow information data queues for a variety of purposes, such as, for example, network traffic performance monitoring and improvement, detection of on-demand attacks and mitigation thereof, *etc.* As such, the interested datacenter internal clients **120** may implement an associated client library module **130** configured with utilities and applications to process the consolidated network flow information data queues along with a client access module **130A** configured to request and receive specific consolidated network flow information data queues to be processed by the associated client library module **130,** in accordance with client-specific evaluation objectives.

As will be described in greater detail below, during operations, each of the Kafka-based message brokering modules **122, 124, 126** may be configured to store a copy of a received packet data stream of network flow information. Because the client library module **130** is aware of the cluster of message brokering modules **122, 124, 126,** for each packet data stream, the client library module **130** operates to select the best message brokering module candidate for serving that particular packet data stream. The selection may be based on a variety of prevailing conditions and/or operational metrics.

For example, with regard to prevailing conditions, as noted above, a copy of each packet data stream is configured to exist in at least two of the Kafka-based message brokering modules **122, 124, 126.** Therefore, if a failure of the packet data stream is detected for a particular message brokering module or the unavailability of the brokering module is detected, the client library module **130** is able to dynamically fallback and select one of the other message brokering modules. And, in an example regarding operational metrics, for all qualified message brokering modules **122, 124, 126,** the client library module **130** may select the message brokering module that provides the lowest communications roundtrip duration time.

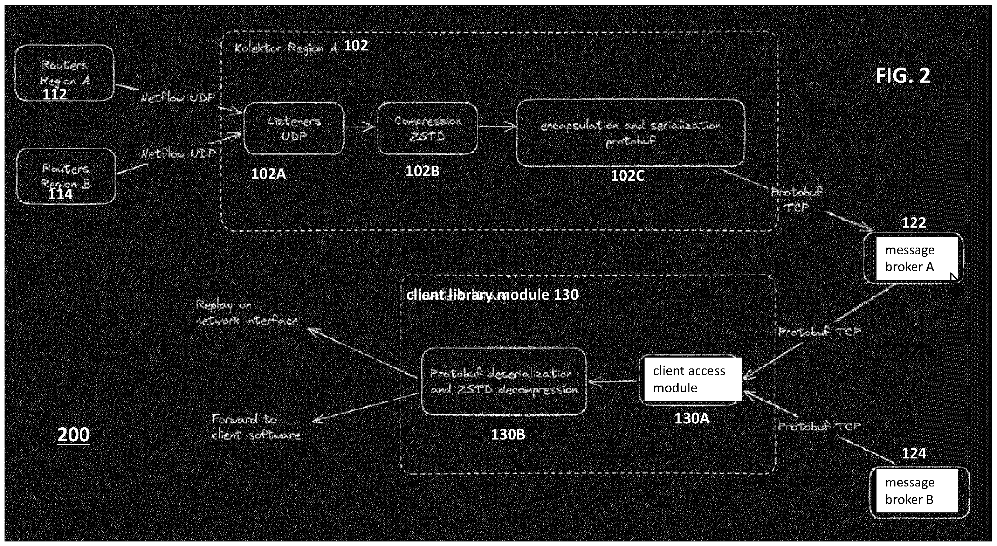

FIG. 2 depicts a functional processing flow diagram **200** of elements of the datacenter network flow information management system **100**, in accordance with the embodiments of the present disclosure. For purposes of clarity and tractability, FIG. 2 focuses on the processing flow of network flow collection device **102.** It should be appreciated that the processing flow of the other network flow collection devices **104, 106** are configured to operate in a similar fashion.

As shown (and previously noted), network flow collection device **102** is communicatively-coupled to at least two network routing devices **112, 114.** The network routing devices **112, 114, 116** are configured to send the network flows information packets, via UDP/TCP, to at least two network flow collection devices **102, 104, 106** for redundancy. In the illustrative example depicted by FIG. 2, the transmission of network flows information packets from the network routing devices **112, 114** to the network flow collection device **102** are based on UDP transmission protocol formats. However, such UDP transmissions are not intended to be limiting, as other transmission formats, such as, for example, TCP, are also contemplated, as TCP provides a higher degree reliability than UDP.

It should be appreciated that, while TCP is more reliable, UDP provides faster operational performance. Therefore, in some embodiments, UDP is selected as the transmission protocol because any packet losses may be substantially compensated by the proximity of the multiple network flow collection devices **102, 104, 106** to the network routing devices **112, 114, 116.** That is, the shorter the network path is, the more likely the UDP packet will reach its destination.

The network flow collection device **102** comprises one or more ports (*not shown*) configured to receive incoming network flow information packets provided by different network routing devices **112, 114** and a monitoring and consolidation module **102A** configured to monitor each of the one or more ports to detect incoming network flow information packets and aggregate the detected network flow information packets into a packet data stream of network flow information. The monitoring and consolidation module **102A** is further configured to detect and alert when it received network flows information from a network device that is not authorized, verify that the format of the received network flows information is valid and transmits an alert to the network device if it is invalid and, upon receiving numerous unexpected network flow information packets it will transmit an alert as suspicious activity.

The monitoring and consolidation module **102A** may also be configured to perform latency measurements between itself and network routing devices by sending "ping" type messages, such as, for example, "*icmp echo request* " packets to all authorized network devices that it is to receive network flows information from. In response, the network routing devices are configured to send "pong" type messages, such as, for example, "*icmp echo reply*" packets to respond back to the monitoring and consolidation module **102A.** The module **102A** then calculates the network latency between itself and the network devices by memorializing its own system time when the ping request message was sent and when the pong response message was received. The time difference between the two points is the total time duration for a roundtrip between module **102A** and the network device, while halving this time duration corresponds to a one-way duration.

The monitoring and consolidation module **102A** may also be configured to perform latency measurements between itself and message brokering modules which, as noted above, process consolidated network flow information data queues. To this end, module **102A** adds the time of reception of the received UDP packets prior to forwarding network flow information data queues to a message broker. Then when it receives a message back from the message broker, it deserializes the metadata, including the time of reception it previously added, and checks the difference between its current system time and the reception time. This time duration corresponds to a full round-trip between module **102A** and the message broker.

Additionally, the monitoring and consolidation module **102A** may also check on changes in process durations. That is, after forwarding the message to the message broker, module **102A** checks its system time again and identifies how much of overhead it added to the entire pipeline. If process durations change, it may indicate that consolidation module **102A** may be degrading and a corresponding alert is sent. Along these lines, it will be appreciated that module **102A** may further incorporate measurement tools to determine whether any of its processing features (*e.g.,* reception, compression, cyphering, transmissions, *etc.*) are slowing down the entire process and require calibration, upgrading, or replacement.

The monitoring and consolidation module **102A** may also be configured to perform clock drift measurements to ensure proper synchronicity. In particular, messages sent by an "exporter" network routing device may also include the system time as to when the exporter routing device sent the network flow information packet flow. The exporter routing device is the corresponding network routing device that transmits the respective network flow information packet. As such, the latency between a particular network flow collection device and the exporter routing device time measurement may be calculated. By way of a nonlimiting example, let T_{ES} represent the exporter routing device system time, let T_{EK} represent the time duration of the exporter routing device during communications with the network flow collection device, and let T_{KS} represent the network flow collection device system time. Therefore, the network flow collection device system time T_{KS} should substantially equal the combination of the exporter routing device system time T_{ES} and the time duration of the exporter routing device communicating with the network flow collection device T_{EK}, in other words: T_{KS} = T_{ES} + T_{EK}. In the event that there is an appreciable disparity between the values of T_{EK} and (T_{ES} + T_{EK}), it may indicate that the network flow collection device system time T_{KS} clock and/or the exporter routing device system time T_{ES} clock may be drifting, in which an alert is transmitted.

The network flow collection device **102** also comprises a compression module **102B** configured to compress the aggregated packet data stream of network flow information. The depicted compression module **102B** operates under the Z Standard algorithm. However, the use of the Z standard compression is not intended to be limiting, as other lossless data compression algorithms are also contemplated.

The network flow collection device **102** further comprises an encapsulation and serialization module **102C** configured to encapsulate and serialize the packet data stream of network flow information into a consolidated network flow information data queue. The encapsulation and serialization of the packet data stream into a consolidated network flow information data queue serves to minimize any further packet data aggregation processing.

Turning back to FIG. 2, upon request for the consolidated network flow information data queue, the network flow collection device **102** forwards the consolidated network flow information data queue. In the illustrated embodiment, the consolidated network flow information data queue is requested by, and forwarded to, the message brokering module **122.** As noted above, the message brokering module **122** is configured receive, store, and forward consolidated network flow information data queues. It is therefore, capable, upon requests, to forward the consolidated network flow information data queue to multiple interested clients **120** through the client access module **130A.**

In addition, the message brokering module **122** is also configured to segregate the consolidated network flow information data queues into individual identifiable network flow information data queues for specific selection by the interested internal clients **120,** in accordance with the requests by the client access module **130A.**

As noted, in response to requests by interested internal clients **120** via the client access module **130A,** the Kafka-based message brokering module **122** forwards the consolidated network flow information data queue based on a request by the client access module **130A.** In the illustrated embodiment, the transmission of consolidated network flow information data queues from the message brokering module **122** to the client access module **130A** are based on TCP transmission formats. However, such TCP transmissions are not intended to be limiting, as other transmission formats, such as, for example, UDP, are also contemplated. In this manner, the client library module **130** is able to connect to the message brokering modules **122, 124, 126** and identify the network flow information data queue streams that are available on each of the message brokering modules **122, 124, 126.** Then, the client library module **130** selects the network flow information data queue streams of interest for subscription, for each of the message brokering modules, either by explicitly selecting identified streams of interest, selecting certain streams of interest via a search and capture executable, or selecting all of the streams.

In turn, the consolidated network flow information data queue received by the client access module **130A** is forwarded to a deserialization/decompression module **130B** for processing. In some embodiments, the deserialization/decompression module **130B** is configured to utilize the same algorithms and standards used for the initial encapsulation, serialization, and compression to execute the reverse deserialization and decompression operations. Accordingly, the deserialization/decompression module **130B** deserializes and decompresses the consolidated network flow information data queues into network flow information packet data streams. It will be appreciated that while deserialization/decompression module **130B** is depicted as being a single module, module **130B** may be divided into separate modules.

Upon processing the consolidated network flow information data queues into network flow information packet data streams, the client library module **130** makes the network flow information packet data streams available to interested internal clients having client-specific evaluation objectives. In certain embodiments, the client library module **130** is embedded within a client access program that is used to provide the client access program with direct access to the network information data queue flows. Additionally, the client access program, in conjunction with the library module **130** is able to forward the network information data queue flows to other programs using a local host loopback. This allows for the use of other network flow information packets analysis programs. In this manner, the client library module **130** does not need to implement any additional buffering, saving, or storing mechanisms, as such features are already provided by the Kafka-based message brokers.

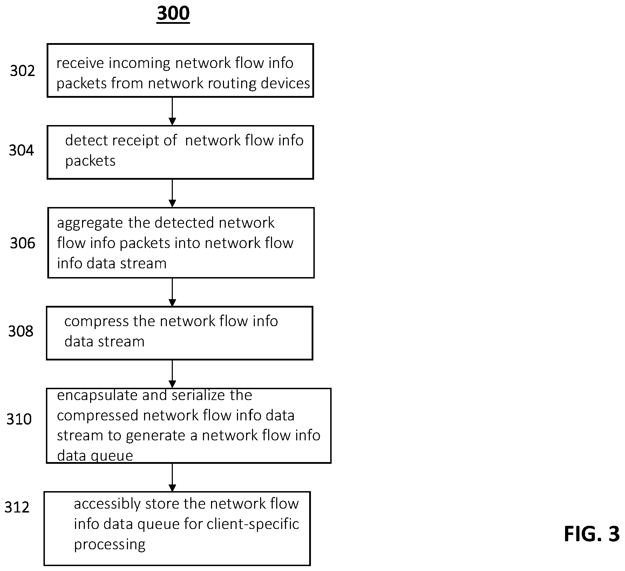

FIG. 3 depicts a flow diagram of a method **300** for collecting network flow information packets, in accordance with the embodiments of the present disclosure. The collection of network flow information packets may be performed by the network flow collection device **102,** consistent with the embodiments of the present disclosure.

As shown, method **300** commences at task block **302** in which the network flow information packets forwarded by the network routing devices **112, 114, 116** are received by the network flow collection device **102.** At task block **304,** the network flow collection device **102** detects the receipt of the network flow information packets and at task block **306,** the detected network flow information packets are aggregated into a network flow information packet data stream. As discussed above, the detection of the received network flow information packets and the aggregation of the detected packets may be conducted by a monitoring and consolidation module **102A** that monitors the ports of the network flow collection device **102** to detect incoming network flow information packets and aggregate the detected network flow information packets into a packet data stream of network flow information.

Then, at task block **308,** the network flow information packet data stream is compressed. Such compression may be conducted by a compression module **102B.** At task block **310,** the compressed network flow information packet data stream is encapsulated and serialized to generate a consolidated network flow information data queue. The encapsulation and serialization may be performed by the encapsulation and serialization module **102C** described above.

Finally, at task block **312,** the consolidated network flow information data queue is accessibly stored for client-specific processing.

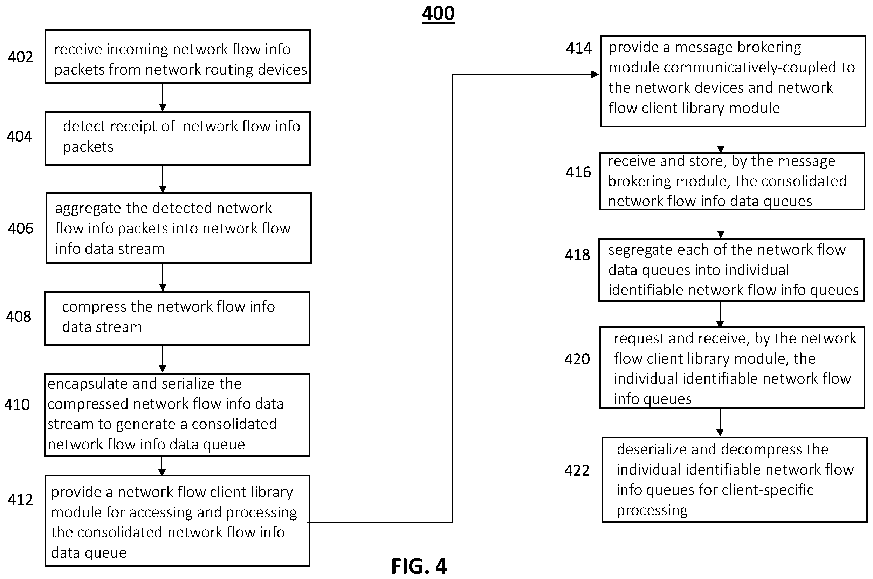

FIG. 4 depicts a flow diagram of a method **400** for managing network flow information, in accordance with the embodiments of the present disclosure. The management of the network flow information packets may be performed by employing various elements of the datacenter network flow information management system **100,** consistent with the embodiments of the present disclosure.

As shown, method **400** commences at task block **402** in which the network flow information packets forwarded by the network routing devices **112, 114, 116** are received by the network flow collection device **102.** At task block **404,** the network flow collection device **102** detects the receipt of the network flow information packets and at task block **406,** the detected network flow information packets are aggregated into a network flow information packet data stream. As discussed above, the detection of the received network flow information packets and the aggregation of the detected packets may be conducted by a monitoring and consolidation module **102A** that monitors the ports of the network flow collection device **102** to detect incoming network flow information packets and aggregate the detected network flow information packets into a packet data stream of network flow information.

Then, at task block **408,** the network flow information packet data stream is compressed. Such compression may be conducted by a compression module **102B.** At task block **410,** the compressed network flow information packet data stream is encapsulated and serialized to generate a consolidated network flow information data queue.

At task block **412,** a network flow client library module **130** is provided for accessing and processing the consolidated network flow information data queue and, at task block **414,** a message brokering module **122** is provided that is communicatively-coupled to the network flow collection device **102** and the network flow client library module **130.**

At task block **416,** the consolidated network flow information data queues are received and stored by the message brokering module **122,** and at task block **418,** the message brokering module **122** operates to segregate each of the consolidated information data queues into individual identifiable network flow information data queues.

Subsequently, at task block **420,** the network flow client library module **130** requests and receives the consolidated network flow information data queues and, at task block **422,** the network flow client library module **130** deserializes and decompresses the network flow information data queues into a packet data stream of network flow information, where the packet data stream of network flow information is made available for client-specific evaluation objectives.

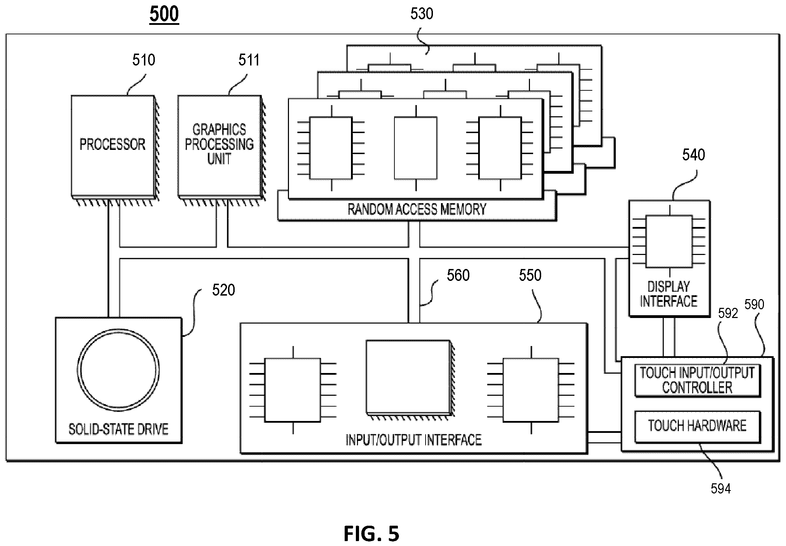

FIG. 5 depicts an exemplary computing environment **500,** which may be used to implement and/or execute any of the methods described herein, in accordance with various embodiments of the present disclosure. In some embodiments, the computing environment **500** may be implemented by any of a conventional personal computer, a network device, and/or an electronic device (such as, but not limited to, a mobile device, a tablet device, a server, a controller unit, a control device, etc.), and/or any combination thereof appropriate to the relevant task at hand.

In some embodiments, the computing environment 500 comprises various hardware components including one or more single or multi-core processors collectively represented by processor 510, a solid-state drive 520, a random access memory 530, and an input/output interface 550. The computing environment 500 may be a computer specifically designed to operate a machine learning algorithm (MLA). The computing environment 100 may be a generic computer system.

In some embodiments, the computing environment **500** may also be a subsystem of one of the above-listed systems. In some other embodiments, the computing environment **500** may be an "off-the-shelf' generic computer system. In some embodiments, the computing environment **500** may also be distributed amongst multiple systems. The computing environment **500** may also be specifically dedicated to the implementation of the present technology. As a person in the art of the present technology may appreciate, multiple variations as to how the computing environment **500** is implemented may be envisioned without departing from the scope of the present technology.

Those skilled in the art will appreciate that processor **510** is generally representative of a processing capability. In some embodiments, in place of or in addition to one or more conventional Central Processing Units (CPUs), one or more specialized processing cores may be provided. For example, one or more Graphic Processing Units **511** (GPUs), Quantum Processing Units (QPUs), Tensor Processing Units (TPUs), and/or other so-called accelerated processors (or processing accelerators) may be provided in addition to or in place of one or more CPUs.

System memory will typically include random access memory **530,** but is more generally intended to encompass any type of non-transitory system memory such as static random access memory (SRAM), dynamic random access memory (DRAM), synchronous DRAM (SDRAM), read-only memory (ROM), or a combination thereof. Solid-state drive **520** is shown as an example of a mass storage device, but more generally such mass storage may comprise any type of non-transitory storage device configured to store data, programs, and other information, and to make the data, programs, and other information accessible via a system bus **560.** For example, mass storage may comprise one or more of a solid state drive, hard disk drive, a magnetic disk drive, and/or an optical disk drive.

Communication between the various components of the computing environment **500** may be enabled by a system bus **560** comprising one or more internal and/or external buses (e.g., a PCI bus, universal serial bus, IEEE 1394 "Firewire" bus, SCSI bus, Serial-ATA bus, ARINC bus, etc.), to which the various hardware components are electronically coupled.

The input/output interface **550** may enable networking capabilities such as wired or wireless network communications. As an example, the input/output interface **550** may comprise a networking interface such as, but not limited to, a network port, a network socket, a network interface controller and the like. Multiple examples of how the networking interface may be implemented will become apparent to the person skilled in the art of the present technology. For example, the networking interface may implement specific physical layer and data link layer standards such as Ethernet, Fibre Channel, Wi-Fi, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface **550** may be coupled to a touchscreen **590** and/or to the one or more internal and/or external buses **560.** The touchscreen **590** may be part of the display. In some embodiments, the touchscreen **590** is the display. The touchscreen **590** may equally be referred to as a screen **590.** In the embodiments illustrated in FIG. 1, the touchscreen **590** comprises touch hardware **594** (e.g., pressure-sensitive cells embedded in a layer of a display allowing detection of a physical interaction between a user and the display) and a touch input/output controller **592** allowing communication with the display interface **540** and/or the one or more internal and/or external buses **560.** In some embodiments, the input/output interface **550** may be connected to a keyboard (not shown), a mouse (not shown) or a trackpad (not shown) allowing the user to interact with the computing environment 500 in addition to or instead of the touchscreen **590.**

According to some implementations of the present technology, the solid-state drive **520** stores program instructions suitable for being loaded into the random access memory **530** and executed by the processor **510** for executing acts of one or more methods described herein. For example, at least some of the program instructions may be part of a library or an application.

The computing environment **500** may include any number of the illustrated components, which may be integrated in any number of physical devices. The computing environment **500** may be implemented as a cloud environment and/or a distributed architecture. The computing environment **500** may include multiple servers, which may be in different physical locations and/or on different networks. The computing environment **500** may include virtualized systems. The methods described herein, or any parts of the methods described herein, may be executed on multiple systems as distributed applications.

As discussed above, the noted network flow information packet data streams bear network traffic operational/management attributes, which enable interested internal clients to extract the information needed to perform their evaluation objectives. Such evaluation objectives may include, for example, monitoring network traffic flow, evaluating network performance, detecting security threats, mitigating malicious attacks (DDoS), determining network infrastructure upgrades in view of future capacity needs, *etc.*

By virtue of the disclosed embodiments, a configuration and method for managing network flow information is presented that uniquely integrate features of various technologies to optimize the balance between resources expended for processing network flows information related to monitoring malicious threats and network traffic status while maintaining an expected level of overall network traffic performance. The disclosed configuration results in the efficiency of processing resources, low latencies, adaptability, and scalability in view of the dynamic nature of expanding network environments and increasing security challenges.

With this said, it should be understood that, although the embodiments presented herein have been described with reference to specific features and structures, various modifications and combinations may be made without departing from the underlying concepts and principles taught by these disclosures. As such, the specification and drawings are to be regarded as providing edifying guidance as to the underlying concepts and principles presented by the implementations and embodiments.

Accordingly, the scope encompassed by the underlying concepts and principles presented by the disclosed implementations and embodiments is defined by the appended claims, and are contemplated to cover any and all modifications, variations, combinations or equivalents that fall within the scope of the present disclosure.

## Claims

1. A network flow collection device (102) for processing network flow information packets for analysis, comprising:
one or more ports configured to receive incoming network flow information packets forwarded by network routing devices (112, 114, 116);
a monitoring and consolidation module (102A) configured to monitor each of the one or more ports to detect incoming network flow information packets and aggregate the detected network flow information packets into a packet data stream of network flow information;
a compression module (102B) configured to compress the packet data stream of network flow information; and
an encapsulation and serialization module (102C) configured to encapsulate and serialize the compressed packet data stream of network flow information into a consolidated network flow information data queue,
wherein, the consolidated network flow information data queue is accessibly stored for further access and processing.

2. The network flow collection device of claim 1, wherein the network flow collection device (102) is communicatively-coupled to at least two network routing devices (112, 114, 116) via UDP or TCP transport protocols.

3. The network flow collection device of claim 1 or 2, wherein the monitoring and consolidation module (102A) is further configured to detect whether the received network flow information packets are from an unauthorized network routing device, determine whether the format of the received network flow information packets is valid, and transmit an alert message upon receiving numerous invalid network flow information packets from the unauthorized network routing device.

4. A method for collecting network flow information packets for analysis, comprising:
receiving, by a network flow collection device (102), incoming network flow information packets forwarded by network routing devices (112, 114, 116);
detecting receipt of the incoming network flow information packets by the network flow collection device (102);
aggregating the detected network flow information packets into a packet data stream of network flow information;
compressing the packet data stream of network flow information;
encapsulating and serializing the compressed packet data stream of network flow information into a consolidated network flow information data queue; and
accessibly storing the consolidated network flow information data queue for further processing.

5. The method of claim 4, further comprising communicatively-coupling the network flow collection device (102) to at least two network routing devices (112, 114, 116) via UDP or TCP transport protocols.

6. The method of claim 4 or 5, further comprising detecting whether the received network flow information packets are from an unauthorized network routing device, determining whether the format of the received network flow information packets is valid, and transmitting an alert message upon receiving numerous invalid network flow information packets from the unauthorized network routing device.

7. A system (100) for managing network flow information, comprising:
a network flow collection device (102) for receiving and processing network flow information packets provided by network routing devices (104), the network flow collection device (102) comprising:
one or more ports configured to receive incoming network flow information packets provided by the network routing devices (104);
a monitoring and consolidation module (102A) configured to monitor each of the one or more ports to detect incoming network flow information packets and aggregate the detected network flow information packets into a packet data stream of network flow information;
a compression module (102B) configured to compress the packet data stream of network flow information; and
an encapsulation and serialization module (102C) configured to encapsulate and serialize the compressed packet data stream of network flow information into a consolidated network flow information data queue;
a network flow client library module (130) configured to access the consolidated network flow information data queue for processing, the network flow client library module comprising:
a client access module (130A) configured to request and receive the consolidated network flow information data queue; and
a deserialization and decompression module (130B) configured to deserialize and decompress the network flow information data queue into a packet data stream of network flow information,
wherein the packet data stream of network flow information is made available for client-specific evaluation objectives.

8. The system of claim 7, further comprising a message brokering module (122) communicatively-coupled to the network flow collection device (102) and the client access module (130A) of the network flow client library module (130), the message brokering module (122) configured to:
receive and store the consolidated network flow information data queue along with prior consolidated network flow information data queues; and
segregate each of the consolidated information data queues into individual identifiable network flow information data queues and accessibly store;
wherein the client access module (130A) extracts a relevant identified individual network flow information data queue for client-specific processing.

9. The system of claim 8, wherein the message brokering module (122) operates under an rdKafka utility framework.

10. The system of claim 8 or 9, wherein the message brokering module (122) communicates with at least two network flow collection devices (102) and the client access module (130A) via UDP or TCP transport protocols.

11. A method for managing network flow information, comprising:
receiving, by a network flow collection device, incoming network flow information packets provided by network routing devices;
detecting receipt of incoming network flow information packets;
aggregating the detected network flow information packets into a packet data stream of network flow information;
compressing the packet data stream of network flow information;
encapsulating and serializing the compressed packet data stream of network flow information into a consolidated network flow information data queue;
providing a network flow client library module for processing the consolidated network flow information data queue by:
requesting and receiving the consolidated network flow information data queue; and
deserializing and decompressing the network flow information data queue into a packet data stream of network flow information,
wherein the packet data stream of network flow information is made available for client-specific processing objectives.

12. The method of claim 11, wherein the detecting of receipt of incoming network flow information packets further comprises detecting whether the received network flow information packets are from an unauthorized network routing device, determining whether the format of the received network flow information packets is valid, and transmitting an alert message upon receiving numerous invalid network flow information packets from the unauthorized network routing device.

13. The method of claim 11 or 12, further comprising:
providing a message brokering module communicatively-coupled to the network flow collection device and the network flow client library module, the message brokering module configured to:
receive and store the consolidated network flow information data queue along with prior consolidated network flow information data queues; and
segregate each of the consolidated information data queues into individual identifiable network flow information data queues,
wherein a client access module (130A) extracts a relevant identified network flow information data queue for client-specific processing objectives.

14. The method of claim 13, wherein the message brokering module (122) operates under an rdKafka utility framework.

15. The method of anyone of claims 11 to 14, wherein the message brokering module (122) communicates with at least two network flow collection devices (102) and the client access module (130A) via UDP or TCP transport protocols.

## Amended claims

### Amended claims in accordance with Rule 137(2) EPC.

1. A network flow collection device (102) for processing network flow information packets for analysis, comprising:
one or more ports configured to receive same incoming network flow information packets forwarded by at least two network routing devices (112, 114, 116);
a monitoring and consolidation module (102A) configured to monitor each of the one or more ports to detect the same incoming network flow information packets, detect whether any of the incoming network flow information is from an authorized or unauthorized network routing device, and aggregate the network flow information packets of the authorized network routing device into a packet data stream of network flow information;
a compression module (102B) configured to compress the packet data stream of network flow information; and
an encapsulation and serialization module (102C) configured to encapsulate and serialize the compressed packet data stream of network flow information into a consolidated network flow information data queue,
wherein, the consolidated network flow information data queue is accessibly stored for further access and processing.

2. The network flow collection device of claim 1, wherein the network flow collection device (102) is communicatively-coupled to the at least two network routing devices (112, 114, 116) via UDP or TCP transport protocols.

3. The network flow collection device of claim 1 or 2 wherein, upon detecting any of the incoming network flow information is from an unauthorized network routing device, the monitoring and consolidation module (102A) is further configured to determine whether the format of the received network flow information packets is valid, and transmit an alert message upon receiving numerous invalid network flow information packets from the unauthorized network routing device.

4. A method for collecting network flow information packets for analysis, comprising:
receiving, by a network flow collection device (102), same incoming network flow information packets forwarded by at least two network routing devices (112, 114, 116);
detecting receipt of the incoming network flow information packets by the network flow collection device (102);
detecting whether any of the incoming network flow information is from an authorized or unauthorized network routing device;
aggregating the detected network flow information packets into a packet data stream of network flow information;
compressing the packet data stream of network flow information;
encapsulating and serializing the compressed packet data stream of network flow information into a consolidated network flow information data queue; and
accessibly storing the consolidated network flow information data queue for further processing.

5. The method of claim 4, further comprising communicatively-coupling the network flow collection device (102) to the at least two network routing devices (112, 114, 116) via UDP or TCP transport protocols.

6. The method of claim 4 or 5 wherein, upon detecting that any of the incoming network flow information is from an unauthorized network routing device, determining whether the format of the received network flow information packets is valid, and transmitting an alert message upon receiving numerous invalid network flow information packets from the unauthorized network routing device.

7. A system (100) for managing network flow information, comprising:
the network flow collection device (102) of claim 1 for receiving and processing same incoming network flow information packets provided by at least two network routing devices (104);
a network flow client library module (130) configured to access the consolidated network flow information data queue provided by the network flow collection device (102) for processing, the network flow client library module comprising:
a client access module (130A) configured to request and receive the consolidated network flow information data queue; and
a deserialization and decompression module (130B) configured to deserialize and decompress the network flow information data queue into a packet data stream of network flow information,
wherein the packet data stream of network flow information is made available for client-specific evaluation objectives.

8. The system of claim 7, further comprising a message brokering module (122) communicatively-coupled to the network flow collection device (102) and the client access module (130A) of the network flow client library module (130), the message brokering module (122) configured to:
receive and store the consolidated network flow information data queue along with prior consolidated network flow information data queues; and
segregate each of the consolidated information data queues into individual identifiable network flow information data queues and accessibly store;
wherein the client access module (130A) extracts a relevant identified individual network flow information data queue for client-specific processing.

9. The system of claim 8, wherein the message brokering module (122) operates under an rdKafka utility framework.

10. The system of claim 8 or 9, wherein the message brokering module (122) communicates with the at least two network flow collection devices (102) and the client access module (130A) via UDP or TCP transport protocols.

11. A method for managing network flow information of a system, comprising:
receiving and processing, by a the network flow collection device of claim 1, same incoming network flow information packets provided by at least two network routing devices;
providing a network flow client library module for processing the consolidated network flow information data queue provided by the network flow collection device by:
requesting and receiving the consolidated network flow information data queue; and
deserializing and decompressing the network flow information data queue into a packet data stream of network flow information,
wherein the packet data stream of network flow information is made available for client-specific processing objectives.

12. The method of claim 11, wherein upon detecting that any of the incoming network flow information is from an unauthorized network routing device, determining whether the format of the received network flow information packets is valid, and transmitting an alert message upon receiving numerous invalid network flow information packets from the unauthorized network routing device.

13. The method of claim 11 or 12, further comprising:
providing a message brokering module communicatively-coupled to the network flow collection device and the network flow client library module, the message brokering module configured to:
receive and store the consolidated network flow information data queue along with prior consolidated network flow information data queues; and
segregate each of the consolidated information data queues into individual identifiable network flow information data queues,
wherein a client access module (130A) extracts a relevant identified network flow information data queue for client-specific processing objectives.

14. The method of claim 13, wherein the message brokering module (122) operates under an rdKafka utility framework.

15. The method of anyone of claims 11 to 14, wherein the message brokering module (122) communicates with the at least two network flow collection devices (102) and the client access module (130A) via UDP or TCP transport protocols.
